(19) Europäisches Patentamt

European Patent Office

Office européen des brevets

(11) **EP 2 704 434 B1**

(12) # EUROPEAN PATENT SPECIFICATION

(45) Date of publication and mention
of the grant of the patent:
**21.03.2018  Bulletin 2018/12**

(21) Application number: **12804866.7**

(22) Date of filing: **22.06.2012**

(51) Int Cl.:
*H04N 19/139* <sup>(2014.01)</sup>   *H04N 19/117* <sup>(2014.01)</sup>
*H04N 19/172* <sup>(2014.01)</sup>   *H04N 19/182* <sup>(2014.01)</sup>
*H04N 19/51* <sup>(2014.01)</sup>   *H04N 19/587* <sup>(2014.01)</sup>
*H04N 19/523* <sup>(2014.01)</sup>   *H04N 19/82* <sup>(2014.01)</sup>

(86) International application number:
**PCT/JP2012/066010**

(87) International publication number:
**WO 2013/002144 (03.01.2013 Gazette 2013/01)**

(54) **METHOD AND DEVICE FOR ENCODING VIDEO IMAGE, METHOD AND DEVICE FOR DECODING VIDEO IMAGE, AND PROGRAM THEREFOR**

VERFAHREN UND VORRICHTUNG ZUM ENKODIEREN VON VIDEOBILDERN, VERFAHREN UND VORRICHTUNG ZUM DEKODIEREN VON VIDEOBILDERN UND PROGRAMM DAFÜR

PROCÉDÉ ET DISPOSITIF DE CODAGE D'IMAGES VIDÉO, PROCÉDÉ ET DISPOSITIF DE DÉCODAGE D'IMAGES VIDÉO, ET PROGRAMME ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **27.06.2011   JP 2011141724**

(43) Date of publication of application:
**05.03.2014   Bulletin 2014/10**

(73) Proprietor: **Nippon Telegraph and Telephone Corporation**
**Tokyo 100-8116 (JP)**

(72) Inventors:
• **MATSUO, Shohei**
  **Musashino-shi**
  **Tokyo 180-8585 (JP)**
• **BANDOH, Yukihiro**
  **Musashino-shi**
  **Tokyo 180-8585 (JP)**
• **TAKAMURA, Seishi**
  **Musashino-shi**
  **Tokyo 180-8585 (JP)**
• **JOZAWA, Hirohisa**
  **Musashino-shi**
  **Tokyo 180-8585 (JP)**

(74) Representative: **Ahner, Philippe et al**
**BREVALEX**
**95, rue d'Amsterdam**
**75378 Paris Cedex 8 (FR)**

(56) References cited:
**US-A1- 2010 098 345**

• **FAOUZI KOSSENTINI ET AL: "An Adaptive Interpolation Filtering Technique", 20110310, no. JCTVC-E284, 10 March 2011 (2011-03-10) , XP030008790, ISSN: 0000-0007**
• **KARCZEWICZ (QUALCOMM) M ET AL: "Video coding technology proposal by Qualcomm", 1. JCT-VC MEETING; 15-4-2010 - 23-4-2010; DRESDEN; (JOINTCOLLABORATIVE TEAM ON VIDEO CODING OF ISO/IEC JTC1/SC29/WG11 AND ITU-TSG.16 ), no. XP030007566, 18 May 2010 (2010-05-18), XP030007567, ISSN: 0000-0049**
• **VATIS Y ET AL: "Motion-And Aliasing-Compensated Prediction Using a Two-Dimensional Non-Separable Adaptive Wiener Interpolation Filter", IMAGE PROCESSING, 2005. ICIP 2005. IEEE INTERNATIONAL CONFERENCE ON, IEEE, PISCATAWAY, NJ, USA,IEEE, vol. 2, 11 September 2005 (2005-09-11), pages 894-897, XP010851198, DOI: 10.1109/ICIP.2005.1530200 ISBN: 978-0-7803-9134-5**

**(Cont. next page)**

- STEFFEN WITTMANN ET AL: "Separable adaptive interpolation filter for video coding", 15TH IEEE INTERNATIONAL CONFERENCE ON IMAGE PROCESSING : ICIP 2008 ; SAN DIEGO, CALIFORNIA, USA, 12 - 15 OCTOBER 2008, IEEE, PISCATAWAY, NJ, USA, 12 October 2008 (2008-10-12), pages 2500-2503, XP031374548, ISBN: 978-1-4244-1765-0
- MATSUO,S. ET AL.: 'Region-based adaptive interpolation filter' JOINT COLLABORATIVE TEAM ON VIDEO CODING (JCT-VC)OF ITU-T SG16 WP3 AND ISO/IEC JTC1/SC29/WG11 JCTVC-E078 10 March 2011, XP030008584
- KOSSENTINI,F. ET AL.: 'An Adaptive Interpolation Filtering Technique' JOINT COLLABORATIVE TEAM ON VIDEO CODING (JCT-VC)OF ITU-T SG16 WP3 AND ISO/IEC JTC1/SC29/WG11 JCTVC-E284 16 March 2011, XP030008790

**Description**

TECHNICAL FIELD

The present invention relates to a technology that achieves an improvement in the performance of interpolation filters in video coding and improves the coding efficiency.

Priority is claimed on Japanese Patent Application No. 2011-141724, filed June 27, 2011.

BACKGROUND ART

In video coding, in a case of inter-frame prediction (motion compensation) coding, which performs prediction between different frames, an already decoded frame is referred to, a motion vector which minimizes the prediction error energy is determined, and a prediction error signal (also called a residual signal) thereof is subjected to orthogonal transform. Thereafter, quantization is applied, entropy encoding is performed, and finally binary data, i.e., a bitstream is obtained. In order to increase the coding efficiency, it is indispensable to reduce the prediction error energy, and thus a prediction scheme that provides high prediction accuracy is required.

A great number of tools for increasing the accuracy of inter-frame prediction have been introduced into video coding standard schemes. For example, if there is occlusion in the nearest frame, the prediction error energy can be further reduced by referring to a frame that is distant in the time domain to some extent, and thus, in H.264/AVC, multiple frames can be referred to. This tool is called multiple reference frame prediction.

In addition, in order to be able to deal with motions having complex shapes, a block size can be subdivided, such as $16\times8$, $8\times16$, $8\times4$, $4\times8$, and $4\times4$, in addition to $16\times16$ and $8\times8$. This tool is called variable block size prediction.

Similar to these, 1/2 accuracy pixels are interpolated from integer-accuracy pixels of a reference frame using a 6-tap filter, and then 1/4 accuracy pixels are generated by linear interpolation using these pixels. Accordingly, it becomes possible to realize accurate prediction for motions of fractional accuracy. This tool is called 1/4 pixel accuracy prediction.

In order to develop the next-generation video coding standard scheme that provides higher coding efficiency than that of H.264/AVC, International Organization for Standardization/International Electrotechnical Commission "Moving Picture Experts Group" (the international organization for standardization ISO/IEC "MPEG") and International Telecommunication Union-Telecommunication Standardization Sector "Video Coding Experts Group" (ITU-T "VCEG") collaboratively established an investigation team (Joint Collaborative Team for Video Coding: JCT-VC). The next-generation standard scheme is called high efficiency video coding: HEVC, various novel coding technologies are now gathering from all over the world, and they are under discussion in the JCT-VC meetings.

Among them, in particular, many proposals related to inter-frame prediction (motion compensation) have been presented, and reference software for HEVC (HEVC test Model: HM) employs tools for improving the prediction efficiency of motion vectors and tools for extending the block size to $16\times16$ or larger.

Moreover, tools for increasing the interpolation accuracy of fractional-accuracy pixels have also been proposed, and a DCT-based interpolation filter: DCT-IF, in which interpolation filter coefficients are derived from basis of discrete cosine transform (DCT) coefficients, is highly effective and it is adopted in HM. In order to further increase the interpolation accuracy, interpolation filters which adaptively change interpolation filter coefficients on a frame-by-frame basis are also proposed, which are called adaptive interpolation filters: AIFs. The adaptive interpolation filter is highly effective in terms of an improvement in the coding efficiency, and it is also adopted in reference software for the next-generation video coding (key technical area: KTA) that was developed under the leadership of VCEG. Because of a high contribution to an improvement in the coding efficiency, an improvement in the performance of interpolation filters is a very expectative domain.

Conventional interpolation filters will be described in greater detail.

[Fixed Interpolation]

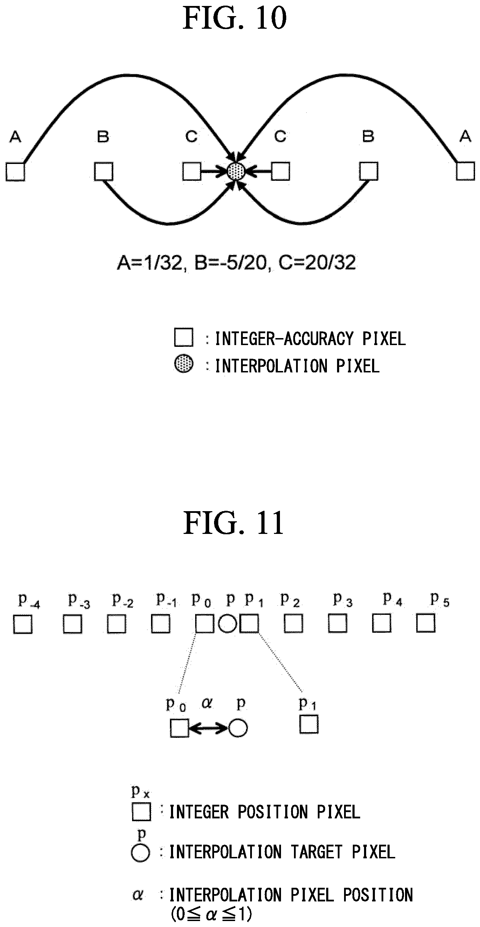

FIG. 10 is a diagram illustrating an interpolation method of a fractional-accuracy pixel in H.264/AVC. In H.264/AVC, as shown in FIG. 10, when a 1/2 pixel position is interpolated, interpolation is performed using six integer pixels in total including three points on the left side of the interpolation target pixel and three points on the right side of the interpolation target pixel. With respect to the vertical direction, interpolation is performed using six integer pixels in total including three points on the upper side and three points on the lower side. Filter coefficients are [(1, -5, 20, 20, -5, 1)/32]. After 1/2 pixels positions have been interpolated, 1/4 pixels positions are interpolated using a mean filter of [1/2, 1/2]. Since it is necessary to interpolate all the 1/2 pixels positions, the computational complexity is high, but high-performance interpolation is possible, so that the coding efficiency is improved. Non-Patent Document 1 and so on disclose the above interpolation technology using a fixed filter.

Filter which use the same coefficient values for all the input pictures and for all the frames, such as a one-dimensional 6-tap filter of H.264/AVC, are called fixed interpolation filters.

As a scheme for further improving the performance of an interpolation filter adopted in H.264/AVC, the reference software HM for HEVC adopts a DCT-based interpolation filter (DCT-IF). FIG. 11 illustrates an interpolation method of a fractional-accuracy pixel by the DCT-based interpolation filter. As shown in FIG. 11, it is assumed that p denotes an interpolation target pixel at a fractional-accuracy position, $p_x$ denotes an integer position pixel, and $\alpha(0<\alpha\leq1)$ denotes a parameter indicating the position of p between integer position pixels. At this time, it is assumed that the number of integer position pixels to be used for interpolation, i.e., a tap length, is 2M (M is an integer that is greater than or equal to 1). From the definitional equation of DCT transform, Equation (1) holds.

[Equation 1]

$$C_k = \frac{1}{M} \sum_{l=-M+1}^{M} p(l) \cos\left(\frac{(2l - 1 + 2M)k\pi}{4M}\right) \tag{1}$$

Moreover, from the definitional equation of inverse DCT transform, Equation (2) holds.

[Equation 2]

$$p(x) = \frac{C_0}{2} + \sum_{k=1}^{2M-1} C_k \cos\left(\frac{\pi(2x - 1 + 2M)k}{4M}\right) \tag{2}$$

When x is regarded as a position, an equation for interpolating a pixel at a fractional position $\alpha$ is represented by the following Equation (3).

[Equation 3]

$$p(\alpha) = \frac{C_0}{2} + \sum_{k=1}^{2M-1} C_k \cos\left(\frac{\pi(2\alpha - 1 + 2M)k}{4M}\right) \tag{3}$$

From Equation (3), it is possible to uniquely derive coefficients once the tap length 2M to be used for interpolation and the interpolation target position $\alpha$ are determined. Examples of an interpolation filter obtained from the above discussion are collected in Table 1 and Table 2. The details of the above are disclosed in Non-Patent Document 2.

[Table 1]

| Fractional Position $\alpha$ | Filter Coefficient Values (6-Tap Filter, 2M = 6) |
|---|---|
| -1/12 | {-4, 19, 254, -19, 8, -2} |
| 1/12 | {4, -16, 252, 22, -8, 2} |
| 1/6 | {6, -28, 242, 48, -17, 5} |
| 1/4 | {9, -37, 227, 75, -25, 7} |
| 2/6 | {11, -42, 208, 103, -33, 9} |
| 5/12 | {12, -44, 184, 132, -39, 11} |
| 1/2 | {11, -43, 160, 160, -43, 11} |
| 7/12 | {11, -39, 132, 184, -44, 12} |
| 2/3 | {9, -33, 103, 208, -42, 11} |
| 3/4 | {7, -25, 75, 227, -37, 9} |
| 5/6 | {5, -17, 48, 242, -28, 6} |

[Table 2]

| Fractional Position $\alpha$ | Filter Coefficient Values (12-Tap Filter, 2M = 12) |
|---|---|
| -1/12 | {1, -3, 5, -10, 22, 253, -19, 10, -6, 4, -2, 1} |
| 1/12 | {-1, 3, -5, 9, -19, 253, 23, -10, 6, -4, 2, -1} |
| 1/6 | {-2, 5, -9, 16, -34, 244, 49, -21, 12, -7, 4, -1} |
| 1/4 | {-1, 6, -12, 21, -43, 229, 75, -30, 17, -10, 5, -1} |
| 2/6 | {-3, 8, -15, 26, -50, 211, 105, -40, 22, -13, 7, -2} |
| 5/12 | {-3, 9, -16, 28, -53, 188, 134, -47, 26, -15, 8, -3} |
| 1/2 | {-2, 7, -15, 28, -52, 162, 162, -52, 28, -15, 7, -2} |
| 7/12 | {-3, 8, -15, 26, -47, 134, 188, -53, 28, -16, 9, -3} |
| 2/3 | {-2, 7, -13, 22, -40, 105, 211, -50, 26, -15, 8, -3} |
| 3/4 | {-1, 5, -10, 17, -30, 75, 229, -43, 21, -12, 6, -1} |
| 5/6 | {-1, 4, -7, 12, -21, 49, 244, -34, 16, -9, 5, -2} |

DCT-based interpolation filters are capable of dealing with any filter length and any interpolation accuracy and they are high-performance interpolation filters, so that they are adopted in the test model HM for HEVC.

[Adaptive Interpolation]

In H.264/AVC, the values of filter coefficients are constant, irrespective of conditions of an input picture (the type of a sequence, the size of a picture, and a frame rate) and coding conditions (the block size, the structure of a group of pictures (GOP), and quantization parameters (QP)). When the values of the filter coefficients are fixed, for example, effects that vary over time, such as aliasing, a quantization error, an error resulting from motion estimation, and camera noise, are not taken into consideration. Therefore, it is considered that an improvement in the performance is limited in terms of the coding efficiency. Accordingly, Non-Patent Document 3 proposes a scheme of adaptively changing interpolation filter coefficients, which is called a non-separable adaptive interpolation filter.

In Non-Patent Document 3, a two-dimensional interpolation filter ($6 \times 6 = 36$ filter coefficients in total) is assumed, and the filter coefficients are determined so as to minimize the prediction error energy. Although it is possible to realize higher coding efficiency than that obtained by a one-dimensional 6-tap fixed interpolation filter used in H.264/AVC, the computational complexity for determining filter coefficients is very high, and thus Non-Patent Document 4 introduces a proposal for reducing the computational complexity.

The technique introduced in Non-Patent Document 4 is called a separable adaptive interpolation filter (SAIF), and it uses a one-dimensional 6-tap interpolation filter rather than a two-dimensional interpolation filter.

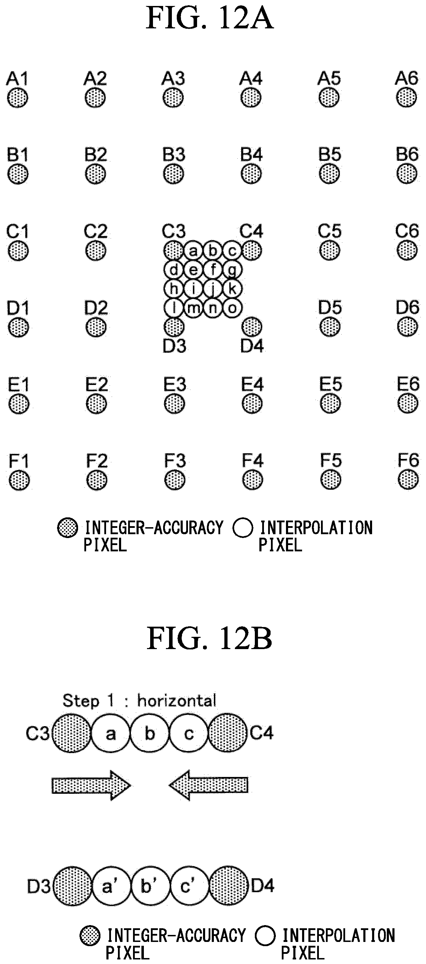

FIG. 12A to FIG. 12C are diagrams illustrating a method for interpolating a fractional-accuracy pixel in the separable adaptive interpolation filter (SAIF). Its procedure is such that, first, as shown by step 1 in FIG. 12B, pixels in the horizontal direction (a, b, and c) are interpolated. Integer-accuracy pixels C1 to C6 are used for determining filter coefficients. Filter coefficients in the horizontal direction that minimize a prediction error energy function $E_h{}^2$ of Equation (4) are analytically determined by the commonly known least square method (see Non-Patent Document 3).

[Equation 4]

$$E_h{}^2 = \sum_{x,y}\left(S_{x,y} - \sum_{c_i} w_{c_i} \cdot P_{\tilde{x}+c_i,\tilde{y}}\right)^2 \tag{4}$$

Here, S denotes an original picture, P denotes an already decoded reference picture, and x and y respectively denote positions in the horizontal direction and the vertical direction in a picture. Moreover, ~x (~ is a symbol placed above x; the same is also applied to the others) satisfies ~x = x + MV$_x$ - FilterOffset, where MV$_x$ denotes the horizontal component of a motion vector that has been obtained beforehand, and FilterOffset denotes an offset for adjustment (the value obtained by dividing a filter length in the horizontal direction by 2). With respect to the vertical direction, ~y = y + MV$_y$ is satisfied, where MV$_y$ denotes the vertical component of the motion vector. w$_{ci}$ denotes a group of filter coefficients in the horizontal direction $c_i (0 \leq c_i < 6)$ that is to be determined.

Linear equations the number of which is equal to the number of the filter coefficients determined by Equation (4) are obtained, and minimizing processes are performed for fractional-pixel positions in the horizontal direction independently of one another. Through the minimizing processes, three groups of 6-tap filter coefficients are determined, and fractional-accuracy pixels a, b, and c are interpolated using these filter coefficient groups.

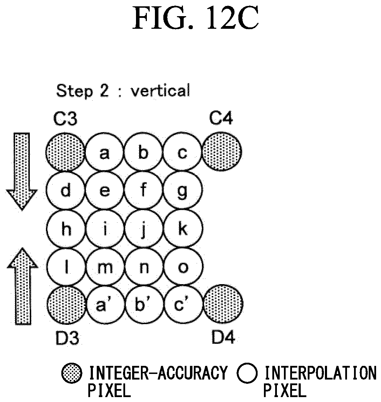

After the interpolation of the pixels in the horizontal direction has been completed, as shown by step 2 in FIG. 12C, an interpolation process in the vertical direction is performed. Filter coefficients in the vertical direction are determined by solving a linear problem similar to that in the horizontal direction. Specifically, filter coefficients in the vertical direction that minimize a prediction error energy function $E_v{}^2$ of Equation (5) are analytically determined.

[Equation 5]

$$E_v{}^2 = \sum_{x,y}\left(S_{x,y} - \sum_{c_j} w_{c_j} \cdot \hat{P}_{\tilde{x},\tilde{y}+c_j}\right)^2 \qquad (5)$$

Here, S denotes an original picture, ^P (^ is a symbol placed above P) denotes a picture which has been decoded and then interpolated in the horizontal direction, and x and y respectively denote positions in the horizontal direction and the vertical direction in a picture. Moreover, ~x is represented as $4 \cdot (x + MV_x)$, where $MV_x$ denotes the horizontal component of a motion vector that has been rounded off to the nearest whole number. With respect to the vertical direction, ~y is represented as $y + MV_y - FilterOffset$, where $MV_y$ denotes the vertical component of the motion vector, and FilterOffset denotes an offset for adjustment (the value obtained by dividing a filter length by 2). $w_{c_j}$ denotes a group of filter coefficients in the vertical direction $c_j (0 \leq c_j < 6)$ that is to be determined.

Minimizing processes are performed for fractional-accuracy pixels independently of one another, and 12 groups of 6-tap filter coefficients are obtained. The remaining fractional-accuracy pixels are interpolated using these filter coefficients.

From the above, it is necessary to encode 90 (=6×15) filter coefficients in total and transmit them to a decoding end. In particular, since the overhead becomes large in low resolution coding, filter coefficients to be transmitted are reduced using the symmetry of a filter. For example, as show in FIG. 12A, viewed from integer-accuracy pixels, b, h, i, j, and k are positioned at the centers with respect to interpolation directions, and with respect to the horizontal direction, coefficients obtained by inverting coefficients to be used for three points on the left side can be applied to three points on the right side. Similarly, with respect to the vertical direction, coefficients obtained by inverting coefficients to be used for three points on the upper side can be applied to three points on the lower side ($c_1 = c_6$, $c_2 = c_5$, and $c_3 = c_4$).

Additionally, since the relationship between d and l is symmetric about h, inverted filter coefficients can be used. That is, by transmitting 6 coefficients for d, their values can be applied to l.$c(d)_1 = c(l)_6$, $c(d)_2 = c(l)_5$, $c(d)_3 = c(l)_4$, $c(d)_4 = c(l)_3$, $c(d)_5 = c(l)_2$, and $c(d)_6 = c(l)_1$ are satisfied. This symmetry is also used for e and m, f and n, and g and o. Although the same theory holds for a and c, since the result for the horizontal direction affects interpolation in the vertical direction, a and c are transmitted separately without using symmetry. As a result of the use of the symmetry described above, the number of filter coefficients to be transmitted for each frame is 51 (15 for the horizontal direction and 36 for the vertical direction).

In the above adaptive interpolation filter of Non-Patent Document 4, the processing unit of the minimization process of the prediction error energy is fixed to a frame. 51 filter coefficients are determined per one frame. If an encoding target frame is roughly divided into two types of texture regions A and B (or multiple types), the optimum filter coefficients are a group of coefficients in which both of them (all the textures) are taken into consideration. Under a situation in which characteristic filter coefficients are essentially obtained only in the vertical direction with respect to the region A and filter coefficients are obtained only in the horizontal direction with respect to the region B, filter coefficients are derived as the average of both of them.

Non-Patent Document 5 proposes a method for achieving a reduction in the prediction error energy and realizing an improvement in the coding efficiency by performing division into regions in accordance with the local property of a picture and generating interpolation filter coefficients for each divided region, without being limited to one group of filter coefficients (51 coefficients) per one frame.

Moreover, in order to improve the performance of the adaptive interpolation filter of Non-Patent Document 4, a technology of grouping interpolation positions, selecting a fixed interpolation filter or an adaptive interpolation filter for each group so that the prediction error energy can be reduced, and generating an interpolated picture is proposed (see Non-Patent Document 6).

Prior Art Documents

Patent Document

Patent Document 1: Japanese Unexamined Patent Application, First Publication No. 2011-82725

Non-Patent Documents

Non-Patent Document 1: Sakae Okubo, Shinya Kadono, Yoshihiro Kikuchi, and Teruhiko Suzuki, "H.264/AVC Textbook: 3rd Revised Edition", Impress R&D, pp. 119-123, 2009
Non-Patent Document 2: Ken McCann, Woo-Jin Han, Il-Koo Kim, Jung-Hye Min, Elena Alshina, Alexander Alshin, Tammy Lee, Jianle Chen, Vadim Seregin, Sunil Lee, Yoon-Mi Hong, Min-Su Cheon, and Nikolay Shlyakhov, "Samsung's Response to the Call for Proposals on Video Compression Technology", JCTVC-A124 r2, pp. 12-14, 1st JCT-VC Meeting, Dresden, Apr. 2010
Non-Patent Document 3: Y. Vatis, B. Edler, D. T. Nguyen, and J. Ostermann: "Motion- and aliasing-compensated prediction using a two-dimensional non-separable adaptive Wiener interpolation filter", Proc. ICIP2005, IEEE International Conference on Image Processing, pp. II 894-897, Genova, Italy, Sep. 2005
Non-Patent Document 4: S. Wittmann and T. Wedi: "Separable adaptive interpolation filter for video coding", Proc. ICIP2008, IEEE International Conference on Image Processing, pp. 2500-2503, San Diego, California, USA, Oct. 2008
Non-Patent Document 5: Shohei Matsuo, Yukihiro Bandoh, Seishi Takamura, and Hirohisa Jozawa: "Enhanced region-based adaptive interpolation filter", Proc. PCS2010, IEEE Picture Coding Symposium, pp. 526-529, Nagoya, Japan, Dec. 2010
Non-Patent Document 6: Faouzi Kossentini, Nader Mahdi, Hsan Guermazi, and Mohammed Ali Ben Ayed: "An Adaptive Interpolation Filtering Technique", JCTVC-E284, 5th JCT-VC Meeting, Geneva, Mar. 2011

SUMMARY OF INVENTION

Problems to be solved by the Invention

The interpolation filters disclosed in Non-Patent Document 4 and Non-Patent Document 5 are not provided with a function of switching an interpolation filter depending on each interpolation position, and thus there is room for improvement in terms of an increase in the performance of motion compensation.
The interpolation filter disclosed Non-Patent Document 6, which has adaptability with respect to interpolation positions, determines whether a fixed interpolation filter which has been previously defined for each interpolation position is to be used or an adaptive interpolation filter which has been derived on a frame-by-frame basis is to be used. This is a scheme in which selection of a filter is performed from the viewpoint of minimizing the prediction error energy, and either one of them is necessarily selected.
When adaptive selection from multiple interpolation filters depending on each interpolation position is performed to aim at improving the coding efficiency, it is considered that setting of interpolation positions affects the performance of improving the coding efficiency. The method disclosed in Non-Patent Document 6 assumes interpolation up to 1/4 pixel-accuracy positions, divides interpolation target pixels into four groups in accordance with their positions, and switches an interpolation filter on a group-by-group basis. Setting of the groups is fixed during a coding process, and adaptability depending on each input picture is not taken into consideration. If the setting of the groups can be changed depending on the property of the input picture, it is possible to realize a further reduction in the prediction error energy and an improvement in the coding efficiency. US 2010/098345 A1 (ANDERSSON KENNETH [SE] ET AL; 22 April 2010) discloses a low complexity rate-distortion metric based on the percentage of pixels of a frame that uses an adapted interpolation filter for specific sub-pel positions. Filter parameters for sub-pel positions with the highest rate-distortion scores on this metric are not transmitted to the decoder and the respective standard filters are used instead for said positions.
In order to solve the above problems, an object of the present invention is to provide a novel scheme which reduces the prediction error energy in inter-frame prediction with in motion compensation than those of conventional technologies and improves the coding efficiency.

Means for Solving the Problems

As a method for achieving the above object, reference probabilities of a motion vector are calculated based on an assumption that the higher the rate of interpolation positions designated by the motion vector is, the higher the rate of an improvement in the performance provided by an interpolation filter is, and grouping for switching the interpolation filter is performed based on statistical information thereof. With the present means, a margin for adaptability with respect to interpolation positions depending on the property of an input picture is provided, and a reduction in the prediction error energy, i.e., an improvement in the coding efficiency is realized.

As described above, the most characteristic aspect of the present invention is that reference probabilities at fractional-pixel positions designated by a motion vector are determined, interpolation positions are grouped based on the reference probabilities, filter coefficients that provide the optimum interpolation filter are selected for each interpolation position group, and the interpolation filter is switched depending on each interpolation position group. Interpolation position group information and interpolation filter coefficient information are encoded for each region, such as a frame or a slice, and they are transmitted to a decoding apparatus. Information with which the decoding apparatus can recognize which interpolation filter coefficients are to be used for each interpolation position group is sufficient for the interpolation filter coefficient information to be encoded. For example, multiple sets of interpolation filter coefficients and interpolation filter indices each of which indicates which interpolation filter is to be used for each interpolation position group may be set as encoding targets.

The decoding apparatus switches interpolation filter coefficients depending on each interpolation position group based on the interpolation position group information and interpolation filter coefficients to be used at each interpolation position, which are obtained by performing decoding on an encoded bitstream, generates an interpolated picture, and performs a decoding process using fractional-accuracy motion compensation.

Specifically, for example, the following processing is performed in video encoding.

- A motion search is performed for each prediction block to acquire a motion vector.
- Reference probabilities (a probability distribution) at fractional-pixel positions, i.e., referents, designated by the acquired motion vector are calculated.
- The fractional-pixel positions, which are interpolation positions, are divided into multiple groups based on the calculated reference probabilities.
- An interpolation filter is determined for each interpolation position group, an interpolation process is performed, and a prediction signal is generated.
- Interpolation position group information, interpolation filter indices each of which indicates which interpolation filter coefficients are to be used, and each of the interpolation filter coefficients are encoded.
- All the other pieces of information to be encoded are encoded.

For example, the following processing is performed in video decoding.

- Decoding is performed on conventional encoded information, and, additionally, interpolation position group information, interpolation filter indices, and interpolation filter coefficients are decoded.
- An interpolation filter to be used for each interpolation position group is determined from the interpolation position group information and an interpolation filter index, an interpolation process is performed, a prediction signal is generated, and a decoded signal is generated.

The following is the operation of the present invention. Conventional interpolation filters having adaptability with respect to interpolation positions set fixed groups as units for switching an interpolation filter and thus there is a limit on an improvement in the performance. In contrast, the present invention divides pixel positions at which interpolation filters are switched into multiple groups in accordance with the probabilities designated by a motion vector. For example, positions designated by a motion vector at high probabilities are set as one group, and an interpolation filter having high accuracy is used for the group. By doing so, it is possible to more flexibly establish the switching of an interpolation filter and improve the coding efficiency.

Advantageous Effects of the Invention

In the present invention, it is possible to make positions to which interpolation filters are applied variable, change the shape and the filter length of an interpolation filter depending on each interpolation position, and perform a highly accurate interpolation process using portions having high reference probabilities, which were incapable of being taken into consideration by conventional interpolation filters having adaptability with respect to interpolation positions. Therefore, an improvement in the coding efficiency as a result of a reduction in the prediction error energy can be achieved.

BRIEF DESCRIPTION OF DRAWINGS

FIG. 1 is a diagram illustrating an example of a configuration of a video encoding apparatus in accordance with an embodiment of the present invention.

FIG. 2 is a diagram illustrating a configuration example 1 of an interpolation filter coefficient determination unit.

FIG. 3 is a diagram illustrating an example of a reference probability at each interpolation position designated by a motion vector.

FIG. 4 is a diagram illustrating a configuration example 2 of the interpolation filter coefficient determination unit.

FIG. 5 is a diagram illustrating a configuration example 3 of the interpolation filter coefficient determination unit.

FIG. 6 is a flowchart of an encoding process in accordance with an embodiment of the present invention.

FIG. 7 is a diagram illustrating an example of a configuration of a video decoding apparatus in accordance with an embodiment of the present invention.

FIG. 8 is a flowchart of a decoding process in accordance with an embodiment of the present invention.

FIG. 9 is a diagram illustrating an example of a configuration of a system when an embodiment of the present invention is implemented using a computer and a software program.

FIG. 10 is a diagram illustrating a method for interpolating a fractional-accuracy pixel in a video coding standard scheme (H.264/AVC).

FIG. 11 is a diagram illustrating a method for interpolating a fractional-accuracy pixel in a DCT-based interpolation filter (DCT-IF).

FIG. 12A is a diagram illustrating a method for interpolating a fractional-accuracy pixel in a separable adaptive interpolation filter (SAIF).

FIG. 12B is a diagram illustrating a method for interpolating a fractional-accuracy pixel in a separable adaptive interpolation filter (SAIF).

FIG. 12C is a diagram illustrating a method for interpolating a fractional-accuracy pixel in a separable adaptive interpolation filter (SAIF).

MODES FOR CARRYING OUT THE INVENTION

Hereinafter, an embodiment of the present invention will be described with reference to drawings.

[Configuration Example of Video Encoding Apparatus]

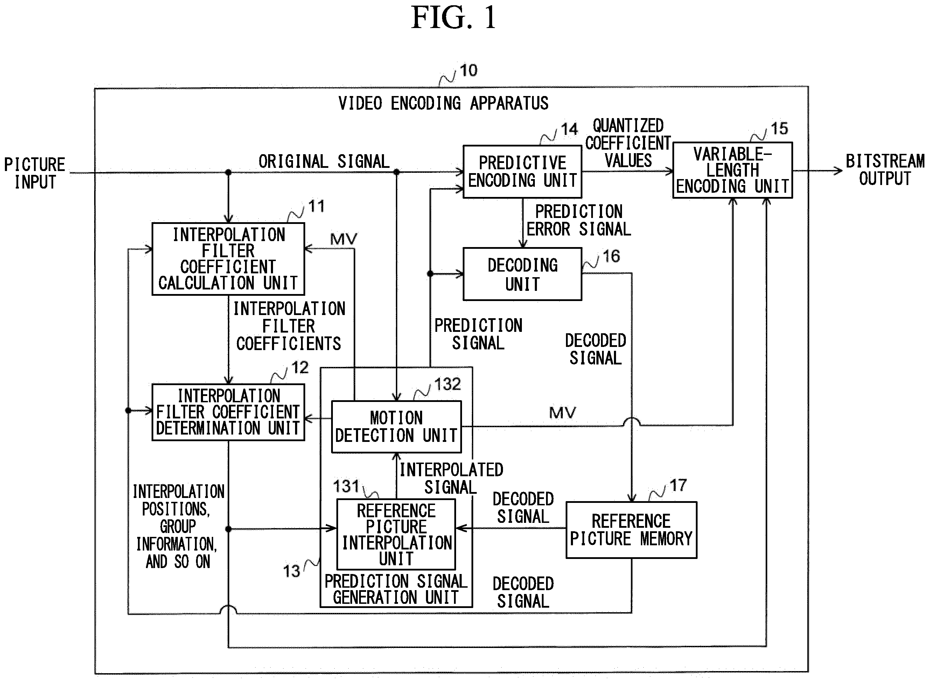

FIG. 1 is a diagram illustrating an example of a configuration of a video encoding apparatus in accordance with an embodiment of the present invention.

In a video encoding apparatus 10, an interpolation filter coefficient calculation unit 11 calculates interpolation filter coefficients for a fractional-accuracy pixel to be used for a reference picture in predictive encoding. An interpolation filter coefficient determination unit 12 calculates reference probabilities at fractional-pixel positions using a motion vector MV detected by a motion detection unit 132, designates the degree of importance of an interpolation filter from the calculated reference probabilities, and designates information on a shape, a filter length, and a bit depth of the interpolation filter from the obtained degree of importance.

A prediction signal generation unit 13 is provided with a reference picture interpolation unit 131 and the motion detection unit 132. The reference picture interpolation unit 131 applies an interpolation filter having interpolation filter coefficients selected by the interpolation filter coefficient determination unit 12 to an already decoded reference picture stored in a reference picture memory 17. The motion detection unit 132 performs a motion search on an interpolated reference picture to calculate a motion vector. The prediction signal generation unit 13 performs motion compensation using the fractional-accuracy motion vector calculated by the motion detection unit 132 to generate a prediction signal.

A predictive encoding unit 14 performs predictive encoding by, for example, calculating a residual signal between an input video signal and the prediction signal, performing orthogonal transform thereon, and quantizing transform coefficients. Moreover, a decoding unit 16 performs decoding on the result of the predictive encoding and stores a decoded picture in the reference picture memory 17 for later predictive encoding. At this time, an in-loop filter for removing coding noise, such as a deblocking filter or an adaptive loop filter (ALF), may be applied and then the storage may be performed.

A variable-length encoding unit 15 performs variable encoding on quantized transform coefficients and motion vectors as well as interpolation position group information, interpolation filter indices, and interpolation filter coefficients, which are outputs of the interpolation filter coefficient determination unit 12, and output them as an encoded bitstream.

[Configuration Example 1 of Interpolation Filter Coefficient Determination Unit]

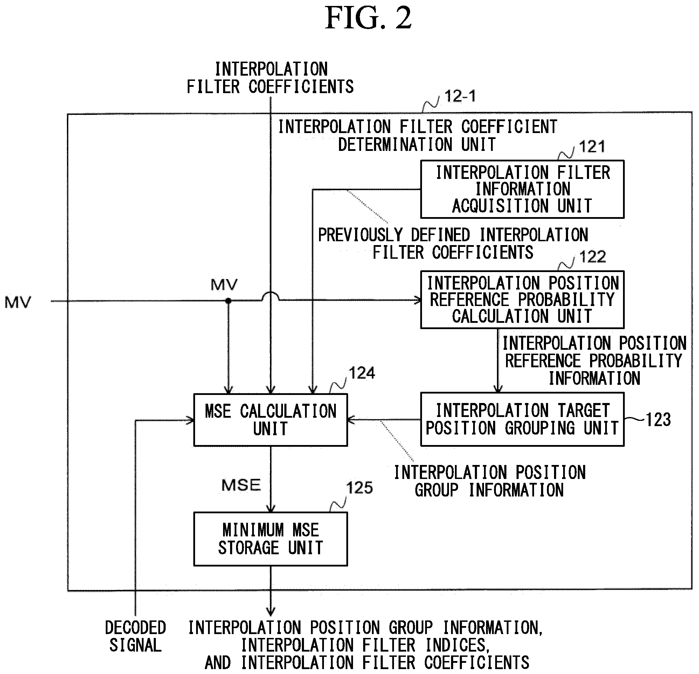

FIG. 2 is a diagram illustrating a configuration example 1 of the interpolation filter coefficient determination unit. In particular, an interpolation position reference probability calculation unit 122 and an interpolation target position grouping unit 123 in an interpolation filter coefficient determination unit 12-1 are remarkably different from conventional technologies.

In the interpolation filter coefficient determination unit 12-1, an interpolation filter information acquisition unit 121 outputs the values of fixed interpolation filter coefficients, which are prepared in advance of encoding, to an MSE calculation unit 124. For example, 6-tap coefficients defined in H.264/AVC, or 8-tap coefficients or 12-tap coefficients in DCT-IF may be used.

The interpolation position reference probability calculation unit 122 calculates reference probabilities at fractional-pixel positions using a motion vector (MV) of an encoding target block. The interpolation position reference probability calculation unit 122 takes a motion vector determined from motion prediction as an input, and determines a probability that each interpolation position in the entire frame or a partial region in a picture is designated by the motion vector.

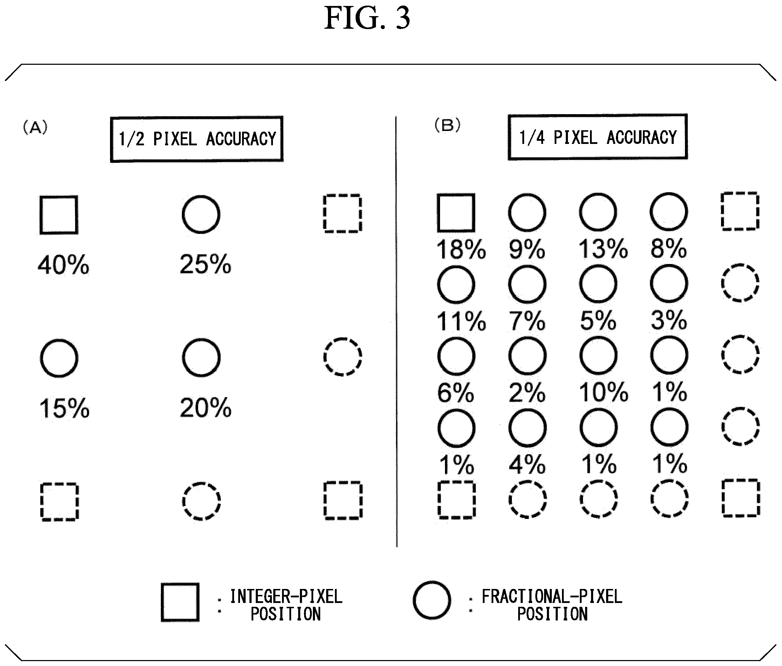

FIG. 3 illustrates an example of a reference probability designated by a motion vector at each interpolation position. For example, when interpolation up to 1/2 pixel accuracy is performed, a probability distribution as shown in FIG. 3(A) is obtained. A similar calculation is possible for 1/n pixel accuracy. FIG. 3(B) illustrates an example of a probability distribution in a case of 1/4 pixel accuracy. The interpolation position reference probability calculation unit 122 outputs probability distribution information (information denoted using %) at each interpolation position as shown in FIG. 3.

The interpolation target position grouping unit 123 takes interpolation position reference probability information calculated by the interpolation position reference probability calculation unit 122 as an input, divides interpolation positions into multiple groups in accordance with reference probabilities arranged in descending order using a predetermined method. For example, in a case of motion compensation using accuracy up to 1/2 pixel accuracy, one point of the highest place is set as a first group and two points of lower places are set as a second group among three points other than integer-pixel positions. In the example of FIG. 3(A), the first group includes the position of {25%}, and the second group includes the positions of {20%, 15%}. Moreover, in a case of motion compensation using accuracy up to 1/4 pixel accuracy, for example, three points of higher places are set as a first group, the subsequent fourth to seventh places are set as a second group, the subsequent eighth to eleventh places are set as a third group, and the remaining four points of lower places are set as a fourth group among 15 points other than integer-pixel positions. In the example of FIG. 3(B), grouping is performed in such a way that the first group includes the positions of {13%, 11%, 10%}, the second group includes the positions of {9%, 8%, 7%, 6%}, the third group includes the positions of {5%, 4%, 3%, 2%}, and the fourth group includes the positions of {1%, 1%, 1%, 1%}. The interpolation target position grouping unit 123 outputs interpolation position group information as described above.

The MSE calculation unit 124 takes the motion vector MV determined by motion prediction, a decoded signal (a local decoded picture), the values of interpolation filter coefficients that are generated during encoding for each frame, each region, or the like, the values of fixed interpolation filter coefficients output from the interpolation filter information acquisition unit 121, and the interpolation position group information output from the interpolation target position grouping unit 123 as inputs, generates an interpolated picture at a position designated by the motion vector MV using integer position pixels of a decoded picture and filter coefficients determined from the interpolation position group information, and calculates a mean square error (MSE) with the original picture, i.e., the prediction residual energy.

For example, the following equation can be used for calculation of an MSE.

$$MSE = \{\text{total sum of (original signal} - \text{prediction signal)}^2\} / \text{number of pixels}$$

The calculated MSE is output to a minimum MSE storage unit 125.

The minimum MSE storage unit 125 takes the MSE obtained by the MSE calculation unit 124 as an input and stores its value. The minimum MSE storage unit 125 compares a previously stored minimum value or a previously defined minimum value with the input MSE, determines that (a) the minimum MSE is the value of the input MSE if the value of the input MSE is smaller than the already stored minimum value and that (b) the minimum MSE is the already stored minimum value if the already stored minimum value is smaller than the value of the input MSE, and stores and updates the minimum value. Moreover, when the minimum value is stored, the minimum MSE storage unit 125 stores interpolation position group information and an interpolation filter index that realize the MSE value.

An interpolation filter index is an identification number that indicates an interpolation filter, and it indicates whether (a) a previously defined fixed interpolation filter is to be used or (b) an adaptive interpolation filter obtained in an encoding process is to be used.

As described above, the interpolation filter coefficient determination unit 12-1 calculates an MSE at each interpolation position for possible combinations of filter coefficients and interpolation positions related to an interpolation filter and then outputs information on a combination that realizes the minimum MSE, i.e., (1) interpolation position group information, (2) interpolation filter indices, and (3) interpolation filter coefficients.

[Configuration Example 2 of Interpolation Filter Coefficient Determination Unit]

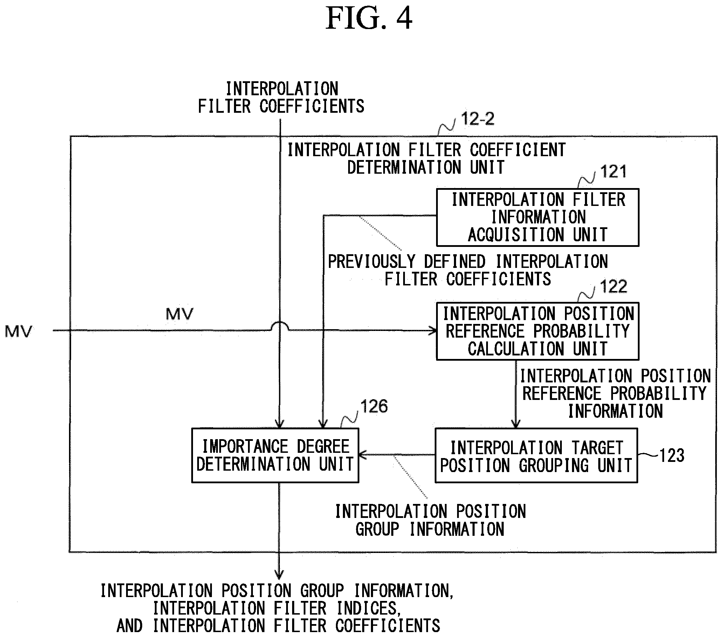

FIG. 4 is a diagram illustrating another configuration example 2 of the interpolation filter coefficient determination unit. The following point is the difference between an interpolation filter coefficient determination unit 12-2 and the interpolation filter coefficient determination unit 12-1 of the above-described configuration example 1. That is, the configuration example 1 selects interpolation filter coefficients with which the prediction error energy by the MSE calculation unit 124 becomes minimum from among interpolation filter coefficients of multiple interpolation filters, such as an adaptive interpolation filter and a fixed interpolation filter, for each of interpolation position groups grouped by the interpolation target position grouping unit 123. In contrast, in the configuration example 2, an importance degree determination unit 126 determines the degree of importance of an interpolation position group depending on the interpolation position group and selects interpolation filter coefficients to be used for an interpolation filter based on the determination result of the degree of importance.

In the interpolation filter coefficient determination unit 12-2, the details of the processes by the interpolation filter information acquisition unit 121, the interpolation position reference probability calculation unit 122, and the interpolation target position grouping unit 123 are the same as those of the above-described configuration example 1.

The importance degree determination unit 126 assumes that the higher a reference probability at a fractional-pixel position designated by a motion vector is, the higher the degree of importance is, and allocates, to each interpolation position group, a shape, a filter length, or a bit depth of an interpolation filter with higher accuracy as the degree of importance becomes higher. That is, the importance degree determination unit 126 allocates, as interpolation filter coefficients to be used for each interpolation position group, interpolation filter coefficients corresponding to an interpolation filter having a larger shape, a longer filter length, or a larger bit depth as the degree of importance becomes higher.

An output of the interpolation filter coefficient determination unit 12-2 in the configuration example 2 includes interpolation position group information indicating a group to which a fractional-accuracy interpolation position belongs, an interpolation filter index indicating interpolation filter coefficients to be used, and the interpolation filter coefficients, and they are encoding targets. It is to be noted that the interpolation filter index may be omitted.

[Configuration Example 3 of Interpolation Filter Coefficient Determination Unit]

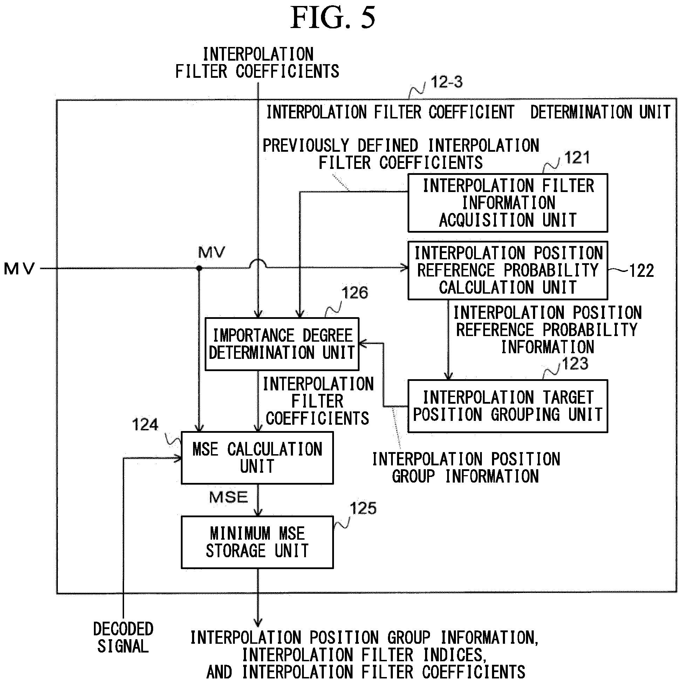

FIG. 5 is a diagram illustrating another configuration example 3 of the interpolation filter coefficient determination unit. An interpolation filter coefficient determination unit 12-3 of the configuration example 3 has a structure obtained by combining the above-described interpolation filter coefficient determination unit 12-1 of the configuration example 1 with the interpolation filter coefficient determination unit 12-2 of the configuration example 2.

In the interpolation filter coefficient determination unit 12-3, the details of processes by the interpolation filter information acquisition unit 121, the interpolation position reference probability calculation unit 122, and the interpolation target position grouping unit 123 are the same as those of the above-described configuration examples 1 and 2.

Interpolation filter coefficients of an adaptive interpolation filter obtained during an encoding process and previously defined filter coefficients of a fixed interpolation filter acquired by the interpolation filter information acquisition unit 121 are input to the importance degree determination unit 126. Moreover, the interpolation position group information determined by the interpolation target position grouping unit 123 is input to the importance degree determination unit 126.

The importance degree determination unit 126 assumes that the higher a reference probability at a fractional-pixel position designated by a motion vector is, the higher the degree of importance is, and selects, for each interpolation position group, several interpolation filter coefficients corresponding to a shape, a filter length, or a bit depth of an interpolation filter with higher accuracy as the degree of importance becomes higher, from among these inputs. That is, the importance degree determination unit 126 selects, from among the input interpolation filter coefficients, multiple sets of interpolation filter coefficients corresponding to interpolation filters having a large shape, a longer filter length, or a larger bit depth as the degree of importance becomes higher.

The MSE calculation unit 124 inputs a motion vector MV determined by motion prediction, a decoded signal (a local decoded picture), and the interpolation filter coefficients selected by the importance degree determination unit 126, generates, for each interpolation position group, an interpolated picture at a position designated by the motion vector MV using integer position pixels of a decoded picture and the interpolation filter coefficients, and calculates a mean square error (MSE) with an original picture. Calculation of the MSE is the same as that described in the configuration example 1.

The minimum MSE storage unit 125 takes MSEs obtained by the MSE calculation unit 124 as an input and stores an MSE having the minimum value among their values.

As described above, the interpolation filter coefficient determination unit 12-3 calculates an MSE at each interpolation position for possible combinations of the interpolation positions and the interpolation filter coefficients selected by the importance degree determination unit 126 related to an interpolation filter, and outputs a combination that realizes the minimum MSE, i.e., interpolation position group information indicating a group to which a fractional-accuracy interpolation position belongs, an interpolation filter index indicating interpolation filter coefficients to be used, and the interpolation filter coefficients.

[Encoding Processing Flow]

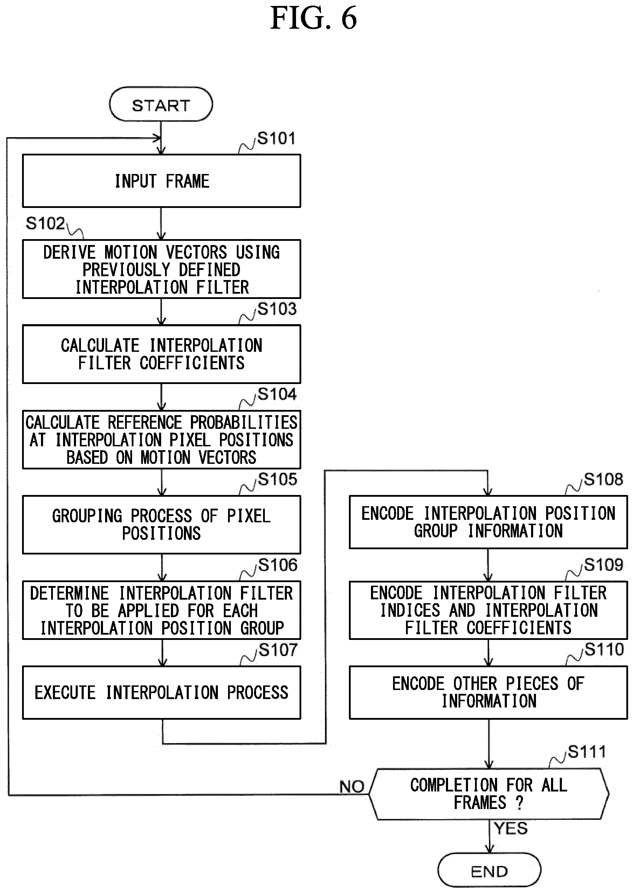

FIG. 6 is a flowchart of the processing of the video encoding apparatus shown in FIG. 1. Hereinafter, the flow of the processing in which the video encoding apparatus encodes one frame will be described in accordance with FIG. 6. The following description assumes the processing for luminance signals unless otherwise specified.

First, in step S101, a frame of an original picture required for an encoding process is input. Subsequently, in step S102, for example, a fixed interpolation filter provided in an encoder, such as a one-dimensional 6-tap filter adopted in H.264/AVC or a one-dimensional 8-tap or 12-tap filter as a DCT-based interpolation filter, is set as a previously defined interpolation filter, and motion vectors (MV) of the entire frame are derived using the interpolation filter. Here, the previously defined interpolation filter is not limited to a fixed interpolation filter, and an adaptive interpolation filter calculated, for example, in the previous frame may be adopted.

Subsequently, in step S103, the values of adaptive interpolation filter coefficients for an encoding target frame are calculated using the motion vectors obtained in step S102. In the calculation of the interpolation filter coefficients in the present step, a commonly-known method for minimizing the prediction error energy (linear regression) is used.

Subsequently, in step S104, a reference probability at each interpolation target position is calculated from the motion vectors determined in step S102. Specifically, the number of designations by the motion vectors is determined, and the number of motion vectors which refer to each interpolation target position among all the motion vectors is calculated from the number of the designations.

Subsequently, in step S105, grouping of interpolation positions is determined from the result of reference probabilities determined in step S104. For example, there are 15 interpolation target positions in total when interpolation target positions having the accuracy up to 1/4 pixel accuracy are to be determined. At this time, the grouping is performed in such a way that the top three places are set as group 1, the fourth to seventh places are set as group 2, the eighth to eleventh places are set as group 3, and the others are set as group 4.

Subsequently, in step S106, the processes of the interpolation filter coefficient determination units 12-1 to 12-3 described with reference to FIG. 2, FIG. 4, and FIG. 5 are executed based on the result of the grouping determined in step S105. For example, the degree of importance of an interpolation position group is set and an interpolation filter to be used is determined. Since the reference probability of group 1 is high, an influence by a filter is large, and thus a high degree of importance is set. At this time, for example, a filter having a high performance is allocated by, for example, employing an interpolation filter having a long tap length or setting a quantization bit depth of a filter coefficient value to a large value. In contrast, since the reference probability of group 4 is low, an influence by an interpolation filter to be used is small even if the performance thereof is low. For example, an interpolation filter having a short tap length is used or a quantization bit depth is set to a small value. Moreover, when there are multiple candidates for interpolation filter coefficients to be used, an MSE when each candidate for the interpolation filter coefficients is used is calculated, and interpolation filter coefficients that provide the minimum prediction error energy is determined.

Subsequently, in step S107, an interpolation process is performed using the interpolation filter coefficients determined in step S106.

Subsequently, in step S108, the interpolation position group information determined in step S105 is encoded. Subsequently, in step S109, the interpolation filter coefficient information determined in step S103 and information necessary for decoding, such as interpolation filter indices, are encoded.

Subsequently, in step S110, all the remaining pieces of information to be encoded, such as prediction error signals (texture component information) and the motion vectors, are encoded.

Subsequently, in step S111, a determination as to whether an encoded frame is the final frame is performed. If the processed frame is not the final frame, the processing returns to step S101 in order to process the next frame. If the processed frame is the final frame, the encoding process is completed.

It is to be noted that a function of changing an interpolation position group based on a reference probability of a motion vector, adjusting an interpolation filter to be used on a group-by-group basis, and performing encoding, which is described in the present embodiment, is not limited to application to luminance signals, and it is also applicable to chrominance signals in a similar manner.

[Configuration Example of Video Decoding Apparatus]

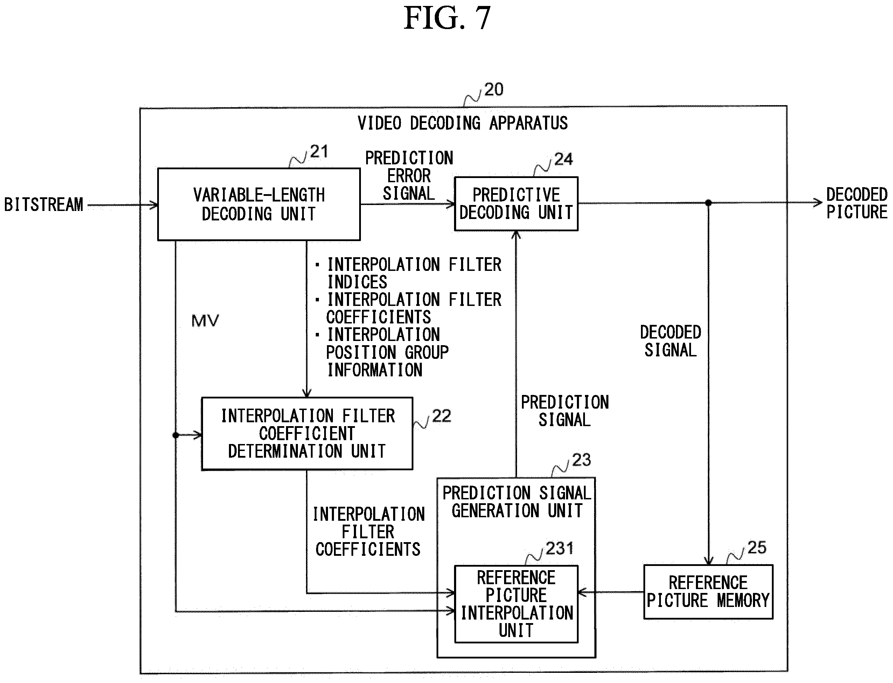

FIG. 7 is a diagram illustrating an example of a configuration of a video decoding apparatus in accordance with an embodiment of the present invention.

In an video decoding apparatus 20, a variable-length decoding unit 21 inputs an encoded bitstream and decodes, for example, quantized transform coefficients, motion vectors, interpolation position group information, interpolation filter indices, and interpolation filter coefficients. An interpolation filter coefficient determination unit 22 determines interpolation filter coefficients to be used for each interpolation position from the interpolation position group information and an interpolation filter index.

A reference picture interpolation unit 231 in a prediction signal generation unit 23 applies an interpolation filter with the interpolation filter coefficients received from the interpolation filter coefficient determination unit 22 to an already decoded reference picture stored in a reference picture memory 25 to restore fractional-accuracy pixels of a reference picture. The prediction signal generation unit 23 generates a prediction signal of a decoding target block from the reference picture, for which the fractional-accuracy pixels have been restored.

A predictive decoding unit 24 performs inverse quantization of the quantized coefficients decoded by the variable-length decoding unit 21, inverse orthogonal transform, and so on, adds a resultant calculated prediction error signal to the prediction signal generated by the prediction signal generation unit 23 to generate a decoded picture, and outputs it as an output picture. Moreover, the decoded picture decoded by the predictive decoding unit 24 is stored in the reference picture memory 25 for later predictive decoding. At this time, an in-loop filter for removing coding noise, such as a deblocking filter or an adaptive loop filter (ALF), may be applied and then the storage may be performed.

[Decoding Processing Flow]

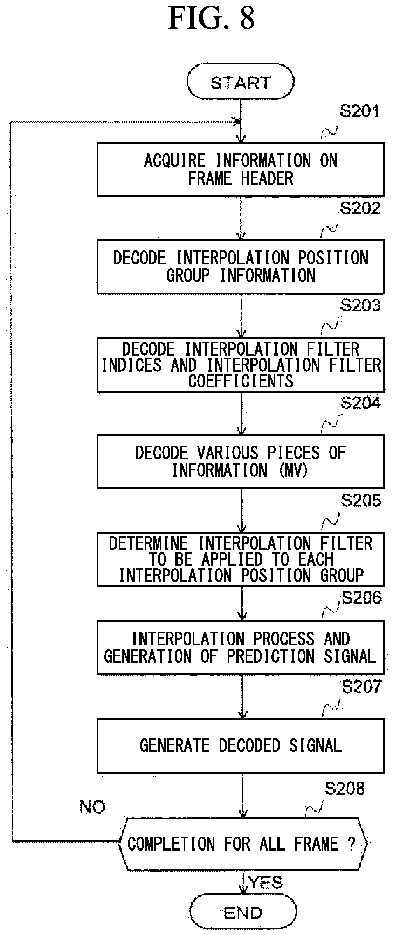

FIG. 8 is a flowchart of the processing of the video decoding apparatus shown in FIG. 7. Hereinafter, the flow of the processing in which the video decoding apparatus decodes one frame will be described in accordance with FIG. 8. The following description assumes the processing for luminance signals unless otherwise specified.

In step S201, information on a frame header (or a slice header) is acquired. Subsequently, in step S202, interpolation position group information is decoded. Subsequently, in step S203, interpolation filter indices and interpolation filter coefficients are decoded.

Subsequently, in step S204, all the other pieces of information necessary for decoding (e.g., motion vectors and a prediction error signal) are decoded.

Subsequently, in step S205, an interpolation filter to be used for each interpolation position is determined from the interpolation position group information obtained in step S202, and an interpolation filter applied to each interpolation position group is determined.

Subsequently, in step S206, an interpolation process using the interpolation filter determined in step S205 is performed to generate a prediction signal. Subsequently, in step S207, the prediction error signal obtained in step S204 is added to the prediction signal obtained in step S206 to generate a decoded signal.

Subsequently, in step S208, a determination as to whether all the frames to be decoded have been decoded is performed, the processing returns to step S201 and transfers to decoding of the next frame if not all the frames have been decoded, and the decoding process is completed if all the frames have been decoded.

Although the above description is targeted for luminance signals, the present flow can also be applied to chrominance signals in a similar manner.

[Configuration Example When Software Program is used]

The above video encoding and decoding processes can also be realized using a computer and a software program, the program may be recorded on a computer-readable recording medium, and the program may be provided through a network.

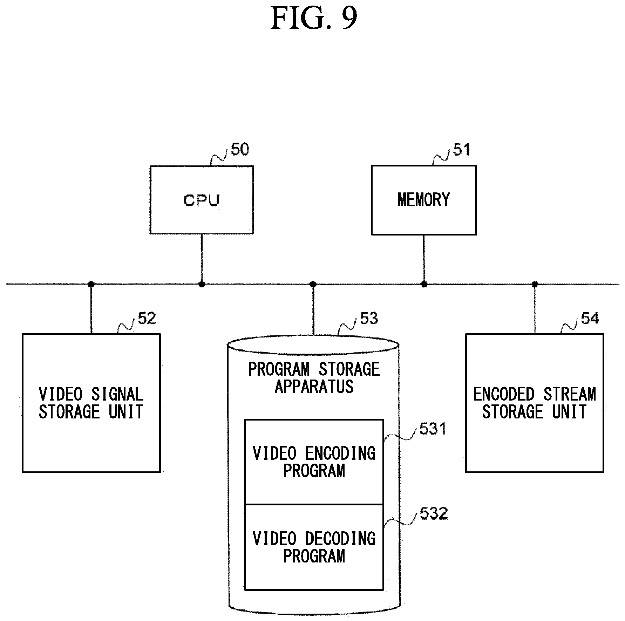

FIG. 9 illustrates an example of a configuration of a system when an embodiment of the present invention is implemented using a computer and a software program.

The present system has a configuration in which a central processing unit (CPU) 50 which executes a program, a memory 51 which stores the program and data accessed by the CPU 50, such as a random access memory (RAM), a video signal storage unit 52 which stores an encoding target video signal or a video signal of decoded pictures, a program storage apparatus 53 which stores a program for causing the CPU 50 to execute the processes described in the embodiment of the present invention, and an encoded stream storage unit 54 which stores a bitstream of an encoded result or a decoding target bitstream are connected with a bus.

The program storage apparatus 53 stores either a video encoding program 531 for encoding a video signal using an embodiment of the present invention or a video decoding program 532 for performing decoding on an encoded bitstream using an embodiment of the present invention. The program storage apparatus 53 may store both of these programs.

Moreover, when the present system is used as the video encoding apparatus, the video encoding program 531 is loaded on the memory 51, and the CPU 50 sequentially fetches and executes instructions of the video encoding program 531 loaded on the memory 51, the CPU 50 encodes a video signal stored in the video signal storage unit 52 using the technique described in an embodiment of the present invention, and the CPU 50 stores a bitstream of an encoded result in the encoded stream storage unit 54. Alternatively, the bitstream may be output to an external apparatus through an interface such as a network adapter.

Furthermore, when the present system is used as the video decoding apparatus, the video decoding program 532 is loaded on the memory 51, the CPU 50 sequentially fetches and executes instructions of the video decoding program 532 loaded on the memory 51, the CPU 50 performs decoding on a bitstream stored in the encoded stream storage unit 54 using the technique described in an embodiment of the present invention, and the CPU 50 stores a video signal of a decoded result in the video signal storage unit 52. Alternatively, the video signal of the decoded result is output to an external reproduction apparatus.

Although embodiments of the present invention have been described above with reference to the drawings, these embodiments are exemplification of the present invention, and it is apparent that the present invention is not limited by these embodiments. That is, the present invention is not limited by the above description and is only limited by the claims stated below.

INDUSTRIAL APPLICABILITY

The present invention is applicable to, for example, video encoding and video decoding using inter-frame prediction with motion compensation. The present invention can achieve an improvement in the coding efficiency as a result of a reduction in the prediction error energy.

Description of Reference Signs

| | |
|---|---|
| 10 | video encoding apparatus |
| 11 | interpolation filter coefficient calculation unit |
| 12, 22 | interpolation filter coefficient determination unit |
| 121 | interpolation filter information acquisition unit |
| 122 | interpolation position reference probability calculation unit |
| 123 | interpolation target position grouping unit |
| 124 | MSE calculation unit |
| 125 | minimum MSE storage unit |
| 126 | importance degree determination unit |
| 13, 23 | prediction signal generation unit |
| 131, 231 | reference picture interpolation unit |
| 132 | motion detection unit |
| 14 | predictive encoding unit |
| 15 | variable-length encoding unit |
| 16 | decoding unit |
| 17, 25 | reference picture memory |
| 20 | video decoding apparatus |
| 21 | variable-length decoding unit |
| 24 | predictive decoding unit |

**Claims**

1. A video encoding method using fractional-accuracy motion compensation, the method comprising:

a step of performing motion searches to acquire motion vectors;
a step of calculating reference probabilities at fractional-pixel positions based on their rate of designation by the acquired motion vectors;
a step of dividing interpolation positions which are the fractional-pixel positions into multiple groups based on the calculated reference probabilities;

a step of selecting, for each of the groups of the interpolation positions, interpolation filter coefficients to be used for generating an interpolated prediction picture from among multiple interpolation filter coefficient candidates;

a step of generating the interpolated prediction picture using the selected interpolation filter coefficients and performing encoding with the fractional-accuracy motion compensation based on the interpolated prediction picture, for each of the groups of the interpolation positions; and

a step of encoding information indicating grouping of the interpolation positions and information indicating interpolation filter coefficients to be used for each of the groups of the interpolation positions,

wherein in selection of the interpolation filter coefficients, a degree of importance is set based on the reference probabilities under an assumption that the higher a reference probability is, the higher the degree of importance of a group of interpolation positions is, and interpolation filter coefficients or a candidate for the interpolation filter coefficients corresponding to an interpolation filter having a larger shape, a longer filter length, or a larger bit depth as the degree of importance becomes higher are selected based on the set degree of importance.

2. The video encoding method according to claim 1, wherein in selection of the interpolation filter coefficients, interpolation filter coefficients which minimize prediction error energy is selected from among the multiple interpolation filter coefficient candidates.

3. A video encoding apparatus using fractional-accuracy motion compensation, the apparatus comprising:

a motion vector acquisition unit which performs motion searches to acquire motion vectors;

a reference probability calculation unit which calculates reference probabilities at fractional-pixel positions based on their rate of designation by the acquired motion vectors;

a grouping unit which divides interpolation positions which are the fractional-pixel positions into multiple groups based on the calculated reference probabilities;

an interpolation filter coefficient selection unit which selects, for each of the groups of the interpolation positions, interpolation filter coefficients to be used for generating an interpolated prediction picture from among multiple interpolation filter coefficient candidates;

a first encoding unit which generates the interpolated prediction picture using the selected interpolation filter coefficients and performs encoding with the fractional-accuracy motion compensation based on the interpolated prediction picture, for each of the groups of the interpolation positions; and

a second encoding unit which encodes information indicating grouping of the interpolation positions and information indicating interpolation filter coefficients to be used for each of the groups of the interpolation positions,

wherein the interpolation filter coefficient selection unit sets a degree of importance based on the reference probabilities under an assumption that the higher a reference probability is, the higher the degree of importance of a group of interpolation positions is, and selects interpolation filter coefficients or a candidate for the interpolation filter coefficients corresponding to an interpolation filter having a larger shape, a longer filter length, or a larger bit depth as the degree of importance becomes higher based on the set degree of importance.

4. A video decoding method using fractional-accuracy motion compensation, the method comprising:

a step of decoding information indicating grouping of interpolation positions which are fractional-pixel positions and information indicating interpolation filter coefficients to be used for each of groups of interpolation positions, the grouping being based on reference probabilities at fractional-pixel positions designated by motion vectors, wherein a degree of importance is set based on the reference probabilities under an assumption that the higher a reference probability is, the higher the degree of importance of a group of interpolation positions is; a step of determining, for each of the groups of the interpolation positions, interpolation filter coefficients to be used for generating an interpolated prediction picture among multiple interpolation filter coefficient candidates based on the decoded information;

a step of decoding the motion vectors and a prediction residual signal;

a step of generating the interpolated prediction picture using an interpolation filter determined by the determined interpolation filter coefficients and generating a prediction signal in motion compensation; and

a step of generating a decoded picture using the decoded prediction residual signal and the generated prediction signal,

wherein

the information indicating the interpolation filter coefficients represents interpolation filter coefficients or a candidate for the interpolation filter coefficients corresponding to an interpolation filter having a larger shape, a longer filter length, or a larger bit depth as the degree of importance of a group of interpolation positions becomes higher.

5. A video decoding apparatus using fractional-accuracy motion compensation, the apparatus comprising:

a first decoding unit which decodes information indicating grouping of interpolation positions which are fractional-pixel positions and information indicating interpolation filter coefficients to be used for each of groups of interpolation positions, the grouping being based on reference probabilities at fractional-pixel positions designated by motion vectors, wherein a degree of importance is set based on the reference probabilities under an assumption that the higher a reference probability is, the higher the degree of importance of a group of interpolation positions is;
an interpolation filter coefficient determination unit which determines, for each of the groups of the interpolation positions, interpolation filter coefficients to be used for generating an interpolated prediction picture among multiple interpolation filter coefficient candidates based on the decoded information;
a second decoding unit which decodes the motion vectors and a prediction residual signal;
a prediction signal generation unit which generates the interpolated prediction picture using an interpolation filter determined by the determined interpolation filter coefficients, and generates a prediction signal in motion compensation; and
a decoded picture generation unit which generates a decoded picture using the decoded prediction residual signal and the generated prediction signal,
wherein
the information indicating the interpolation filter coefficients represents interpolation filter coefficients or a candidate for the interpolation filter coefficients corresponding to an interpolation filter having a larger shape, a longer filter length, or a larger bit depth as the degree of importance of a group of interpolation positions becomes higher.

6. A video encoding program comprising instructions which, when the program is executed by a computer, cause the computer to execute the video encoding method according to claim 1 or 2.

7. A video decoding program comprising instructions which, when the program is executed by a computer, cause the computer to execute the video decoding method according to claim 4.

**Patentansprüche**

1. Videokodierungsverfahren unter Verwendung von Bewegungskompensation mit Bruchteilsgenauigkeit, wobei das Verfahren umfasst:

einen Schritt der Durchführung von Bewegungssuchvorgängen zum Erfassen von Bewegungsvektoren;
einen Schritt der Berechnung von Referenzwahrscheinlichkeiten an Bruchteilspixelpositionen basierend auf ihrer Benennungsrate durch die erfassten Bewegungsvektoren;
einen Schritt des Teilens von Interpolationspositionen, die die Bruchteilspixelpositionen sind, in mehrere Gruppen basierend auf den berechneten Referenzwahrscheinlichkeiten;
einen Schritt des Auswählens, für jede der Gruppen der Interpolationspositionen, von Interpolationsfilterkoeffizienten zur Verwendung zum Generieren eines interpolierten Prädiktionsbilds aus mehreren Interpolationsfilterkoeffizientenkandidaten;
einen Schritt des Generierens des interpolierten Prädiktionsbilds unter Verwendung der ausgewählten Interpolationsfilterkoeffizienten und des Durchführens der Kodierung mit der Bewegungskompensation mit Bruchteilsgenauigkeit basierend auf dem interpolierten Prädiktionsbild für jede der Gruppen der Interpolationspositionen; und
einen Schritt des Kodierens von Information, die eine Gruppierung der Interpolationspositionen angibt, und von Information, die Interpolationsfilterkoeffizienten zur Verwendung für jede der Gruppe der Interpolationspositionen angibt,
wobei bei der Auswahl der Interpolationsfilterkoeffizienten ein Wichtigkeitsgrad eingestellt wird basierend auf den Referenzwahrscheinlichkeiten unter einer Annahme, dass je größer eine Referenzwahrscheinlichkeit ist, desto größer der Wichtigkeitsgrad einer Gruppe von Interpolationspositionen ist, und wobei Interpolationsfilterkoeffizienten oder ein Kandidat für die Interpolationsfilterkoeffizienten entsprechend einem Interpolationsfilter mit einer größeren Gestalt, einer längeren Filterlänge oder einer breiteren Bittiefe, wenn der Wichtigkeitsgrad größer wird, ausgewählt werden basierend auf dem eingestellten Wichtigkeitsgrad.

**2.** Videokodierungsverfahren nach Anspruch 1, wobei bei der Auswahl der Interpolationsfilterkoeffizienten Interpolationsfilterkoeffizienten aus den mehreren Interpolationsfilterkoeffizientenkandidaten ausgewählt werden, die eine Prädiktionsfehlerenergie minimieren.

**3.** Videokodierungsgerät unter Verwendung von Bewegungskompensation mit Bruchteilsgenauigkeit, wobei das Gerät umfasst:

eine Bewegungsvektorerfassungseinheit, die Bewegungssuchvorgänge durchführt, um Bewegungsvektoren zu erfassen;

eine Referenzwahrscheinlichkeitsberechnungseinheit, die Referenzwahrscheinlichkeiten bei Bruchteilspixelpositionen berechnet basierend auf ihrer Benennungsrate durch die erfassten Bewegungsvektoren;

eine Gruppierungseinheit, die Interpolationspositionen, die die Bruchteilspixelpositionen sind, in mehrere Gruppen teilt basierend auf den berechneten Referenzwahrscheinlichkeiten;

eine Interpolationsfilterkoeffizientenauswahleinheit, die für jede der Gruppen der Interpolationspositionen Interpolationsfilterkoeffizienten zur Verwendung für die Generierung eines interpolierten Prädiktionsbilds aus mehreren Interpolationsfilterkoeffizientenkandidaten auswählt;

eine erste Kodierungseinheit, die das interpolierte Prädiktionsbild generiert unter Verwendung der ausgewählten Interpolationsfilterkoeffizienten, und eine Kodierung mit der Bewegungskompensation mit Bruchteilsgenauigkeit durchführt basierend auf dem interpolierten Prädiktionsbild für jede der Gruppen der Interpolationspositionen; und

eine zweite Kodierungseinheit, die Information kodiert, die eine Gruppierung der Interpolationspositionen angibt, und Information, die Interpolationsfilterkoeffizienten zur Verwendung für jede der Gruppen der Interpolationspositionen angibt,

wobei die Interpolationsfilterkoeffizientenauswahleinheit einen Wichtigkeitsgrad basierend auf den Referenzwahrscheinlichkeiten einstellt unter einer Annahme, dass je größer eine Referenzwahrscheinlichkeit ist, desto größer der Wichtigkeitsgrad einer Gruppe von Interpolationspositionen ist, und Interpolationsfilterkoeffizienten oder einen Kandidaten für die Interpolationsfilterkoeffizienten auswählt entsprechend einem Interpolationsfilter mit einer größeren Gestalt, einer längeren Filterlänge oder einer größeren Bittiefe, wenn der Wichtigkeitsgrad größer wird, basierend auf dem eingestellten Wichtigkeitsgrad.

**4.** Videodekodierungsverfahren unter Verwendung von Bewegungskompensation mit Bruchteilsgenaugkeit, wobei das Verfahren umfasst:

einen Schritt des Decodierens von Information, die eine Gruppierung von Interpolationspositionen angibt, die Bruchteilspixelpositionen sind, und von Information, die Interpolationsfilterkoeffizienten angibt zur Verwendung für jede von Gruppen von Interpolationspositionen, wobei die Gruppierung auf Referenzwahrscheinlichkeiten bei Bruchteilspixelpositionen basiert, die durch Bewegungsvektoren benannt sind, wobei ein Wichtigkeitsgrad eingestellt wird basierend auf den Referenzwahrscheinlichkeiten unter einer Annahme, dass je größer eine Referenzwahrscheinlichkeit ist, desto größer der Wichtigkeitsgrad einer Gruppe von Interpolationspositionen ist;

einen Schritt des Bestimmens, für jede der Gruppen der Interpolationspositionen, von Interpolationsfilterkoeffizienten zur Verwendung für die Generierung eines interpolierten Prädiktionsbilds aus mehreren Interpolationsfilterkoeffizientenkandidaten basierend auf der dekodierten Information;

einen Schritt des Decodierens der Bewegungsvektoren und eines Prädiktionsrestsignals;

einen Schritt des Generierens des interpolierten Prädiktionsbilds unter Verwendung eines Interpolationsfilters, das durch die bestimmten Interpolationsfilterkoeffizienten bestimmt ist, und des Generierens eines Prädiktionssignals bei Bewegungskompensation; und

einen Schritt des Generierens eines dekodierten Bilds unter Verwendung des dekodierten Prädiktionsrestsignals und des generierten Prädiktionssignals,

wobei die Information, die die Interpolationsfilterkoeffizienten angibt, Interpolationsfilterkoeffizienten repräsentiert oder einen Kandidaten für die Interpolationsfilterkoeffizienten entsprechend einem Interpolationsfilter mit einer größeren Gestalt, einer längeren Filterlänge oder einer größeren Bittiefe, wenn der Wichtigkeitsgrad einer Gruppe von Interpolationspositionen größer wird.

**5.** Videodekodiergerät unter Verwendung von Bewegungskompensation mit Bruchteilsgenauigkeit, wobei das Gerät umfasst:

eine erste Dekodierungseinheit, die Information dekodiert, die eine Gruppierung von Interpolationspositionen angibt, die Bruchteilspixelpositionen sind, und Information, die Interpolationsfilterkoeffizienten angibt zur Verwendung für jede von Gruppen von Interpolationspositionen, wobei die Gruppierung auf Referenzwahrscheinlichkeiten bei Bruchteilspixelpositionen basiert, die durch Bewegungsvektoren benannt werden, wobei ein Wichtigkeitsgrad basierend auf den Referenzwahrscheinlichkeiten eingestellt wird unter einer Annahme, dass je größer eine Referenzwahrscheinlichkeit ist, desto größer der Wichtigkeitsgrad einer Gruppe von Interpolationspositionen ist;

eine Interpolationsfilterkoeffizientenbestimmungseinheit, die für jede der Gruppen der Interpolationspositionen Interpolationsfilterkoeffizienten zur Verwendung für die Generierung eines interpolierten Prädiktionsbilds aus mehreren Interpolationsfilterkoeffizientenkandidaten basierend auf der dekodierten Information bestimmt;

eine zweite Dekodierungseinheit, die die Bewegungsvektoren und ein Prädiktionsrestsignal dekodiert;

eine Prädiktionssignalgenerierungseinheit, die das interpolierte Prädiktionsbild unter Verwendung eines Interpolationsfilters generiert, das durch die bestimmten Interpolationsfilterkoeffizienten bestimmt ist, und ein Prädiktionssignal bei Bewegungskompensation generiert; und

eine Dekodiertbildgenerierungseinheit, die ein dekodiertes Bild generiert unter Verwendung des dekodierten Prädiktionsrestsignals und des generierten Prädiktionssignals,

wobei die Information, die die Interpolationsfilterkoeffizienten angibt, Interpolationsfilterkoeffizienten repräsentiert oder einen Kandidaten für die Interpolationsfilterkoeffizienten entsprechend einem Interpolationsfilter mit einer größeren Gestalt, einer längeren Filterlänge oder einer größeren Bittiefe, wenn der Wichtigkeitsgrad einer Gruppe von Interpolationspositionen größer wird.

6. Videokodierungsprogramm, das Befehle enthält, die bei Ausführung des Programms durch einen Computer den Computer veranlassen, das Videokodierungsverfahren nach Anspruch 1 oder 2 auszuführen.

7. Videodekodierungsprogramm, das Befehle enthält, die bei Ausführung des Programms durch einen Computer den Computer veranlassen, das Videodekodierungsverfahren nach Anspruch 4 auszuführen.


**Revendications**

1. Procédé de codage vidéo utilisant une compensation de mouvement de précision fractionnaire, le procédé comprenant :

une étape de réalisation de recherches de mouvement pour acquérir des vecteurs de mouvement ;
une étape de calcul de probabilités de référence à des positions de pixel fractionnaire d'après leur taux de désignation par les vecteurs de mouvement acquis ;
une étape de division de positions d'interpolation qui sont les positions de pixel fractionnaire en de multiples groupes d'après les probabilités de référence calculées ;
une étape de sélection, pour chacun des groupes des positions d'interpolation, de coefficients de filtre d'interpolation à utiliser pour générer une image de prédiction interpolée parmi de multiples candidats de coefficient de filtre d'interpolation ;
une étape de génération de l'image de prédiction interpolée à l'aide des coefficients de filtre d'interpolation sélectionnés et de réalisation d'un codage avec la compensation de mouvement de précision fractionnaire d'après l'image de prédiction interpolée, pour chacun des groupes des positions d'interpolation ; et
une étape de codage d'informations indiquant un regroupement des positions d'interpolation et d'informations indiquant des coefficients de filtre d'interpolation à utiliser pour chacun des groupes des positions d'interpolation,
dans lequel, lors de la sélection des coefficients de filtre d'interpolation, un degré d'importance est établi d'après les probabilités de référence selon l'hypothèse que plus la probabilité de référence est élevée, plus le degré d'importance d'un groupe de positions d'interpolation est élevé, et des coefficients de filtre d'interpolation ou un candidat pour les coefficients de filtre d'interpolation correspondant à un filtre d'interpolation ayant une forme plus grande, une longueur de filtre plus longue, ou une profondeur de bit plus grande à mesure que le degré d'importance devient plus élevé sont sélectionnés d'après le degré d'importance établi.

2. Procédé de codage vidéo selon la revendication 1, dans lequel, lors de la sélection des coefficients de filtre d'interpolation, des coefficients de filtre d'interpolation qui minimisent une énergie d'erreur de prédiction sont sélectionnés parmi les multiples candidats de coefficient de filtre d'interpolation.

3. Appareil de codage vidéo utilisant une compensation de mouvement de précision fractionnaire, l'appareil comprenant :

une unité d'acquisition de vecteurs de mouvement qui réalise des recherches de mouvement pour acquérir des vecteurs de mouvement ;

une unité de calcul de probabilités de référence qui calcule des probabilités de référence à des positions de pixel fractionnaire d'après leur taux de désignation par les vecteurs de mouvement acquis ;

une unité de regroupement qui divise des positions d'interpolation qui sont les positions de pixel fractionnaire en de multiples groupes d'après les probabilités de référence calculées ;

une unité de sélection de coefficients de filtre d'interpolation qui sélectionne, pour chacun des groupes des positions d'interpolation, des coefficients de filtre d'interpolation à utiliser pour générer une image de prédiction interpolée parmi de multiples candidats de coefficient de filtre d'interpolation ;

une première unité de codage qui génère l'image de prédiction interpolée à l'aide des coefficients de filtre d'interpolation sélectionnés et réalise un codage avec la compensation de mouvement de précision fractionnaire d'après l'image de prédiction interpolée, pour chacun des groupes des positions d'interpolation ; et

une seconde unité de codage qui code des informations indiquant un regroupement des positions d'interpolation et des informations indiquant des coefficients de filtre d'interpolation à utiliser pour chacun des groupes des positions d'interpolation,

dans lequel l'unité de sélection de coefficients de filtre d'interpolation établit un degré d'importance d'après les probabilités de référence selon l'hypothèse que plus la probabilité de référence est élevée, plus le degré d'importance d'un groupe de positions d'interpolation est élevé, et sélectionne des coefficients de filtre d'interpolation ou un candidat pour les coefficients de filtre d'interpolation correspondant à un filtre d'interpolation ayant une forme plus grande, une longueur de filtre plus longue, ou une profondeur de bit plus grande à mesure que le degré d'importance devient plus élevé d'après le degré d'importance établi.

4. Procédé de décodage vidéo utilisant une compensation de mouvement de précision fractionnaire, le procédé comprenant :

une étape de décodage d'informations indiquant un regroupement de positions d'interpolation qui sont des positions de pixel fractionnaire et d'informations indiquant des coefficients de filtre d'interpolation à utiliser pour chacun des groupes de positions d'interpolation, le regroupement étant basé sur des probabilités de référence à des positions de pixel fractionnaire désignées par des vecteurs de mouvement, dans lequel un degré d'importance est établi d'après les probabilités de référence selon l'hypothèse que plus une probabilité de référence est élevée, plus le degré d'importance d'un groupe de positions d'interpolation est élevé ;

une étape de détermination, pour chacun des groupes des positions d'interpolation, de coefficients de filtre d'interpolation à utiliser pour générer une image de prédiction interpolée parmi de multiples candidats de coefficient de filtre d'interpolation d'après les informations décodées ;

une étape de décodage des vecteurs de mouvement et d'un signal résiduel de prédiction ;

une étape de génération de l'image de prédiction interpolée à l'aide d'un filtre d'interpolation déterminé par les coefficients de filtre d'interpolation déterminés et de génération d'un signal de prédiction en compensation de mouvement ; et

une étape de génération d'une image décodée à l'aide du signal résiduel de prédiction décodé et du signal de prédiction généré,

dans lequel les informations indiquant les coefficients de filtre d'interpolation représentent des coefficients de filtre d'interpolation ou un candidat pour les coefficients de filtre d'interpolation correspondant à un filtre d'interpolation ayant une forme plus grande, une longueur de filtre plus longue, ou une profondeur de bit plus grande à mesure que le degré d'importance d'un groupe de positions d'interpolation devient plus élevé.

5. Appareil de décodage vidéo utilisant une compensation de mouvement de précision fractionnaire, l'appareil comprenant :

une première unité de décodage qui décode des informations indiquant un regroupement de positions d'interpolation qui sont des positions de pixel fractionnaire et des informations indiquant des coefficients de filtre d'interpolation à utiliser pour chacun de groupes de positions d'interpolation, le regroupement étant basé sur des probabilités de référence à des positions de pixel fractionnaire désignées par des vecteurs de mouvement, dans lequel un degré d'importance est établi d'après les probabilités de référence selon l'hypothèse que plus une probabilité de référence est élevée, plus le degré d'importance d'un groupe de positions d'interpolation est élevé ;

une unité de détermination de coefficients de filtre d'interpolation qui détermine, pour chacun des groupes des positions d'interpolation, des coefficients de filtre d'interpolation à utiliser pour générer une image de prédiction interpolée parmi de multiples candidats de coefficient de filtre d'interpolation d'après les informations décodées ;

une seconde unité de décodage qui décode les vecteurs de mouvement et un signal résiduel de prédiction ;
une unité de génération de signal de prédiction qui génère l'image de prédiction interpolée à l'aide d'un filtre d'interpolation déterminé par les coefficients de filtre d'interpolation déterminés, et génère un signal de prédiction en compensation de mouvement ; et
une unité de génération d'image décodée qui génère une image décodée à l'aide du signal résiduel de prédiction décodé et du signal de prédiction généré,
dans lequel les informations indiquant les coefficients de filtre d'interpolation représentent des coefficients de filtre d'interpolation ou un candidat pour les coefficients de filtre d'interpolation correspondant à un filtre d'interpolation ayant une forme plus grande, une longueur de filtre plus longue, ou une profondeur de bit plus grande à mesure que le degré d'importance d'un groupe de positions d'interpolation devient plus élevé.

6. Programme de codage vidéo comprenant des instructions qui, lorsque le programme est exécuté par un ordinateur, amènent l'ordinateur à exécuter le procédé de codage vidéo selon la revendication 1 ou 2.

7. Programme de décodage vidéo comprenant des instructions qui, lorsque le programme est exécuté par un ordinateur, amènent l'ordinateur à exécuter le procédé de décodage vidéo selon la revendication 4.

# FIG. 1

VIDEO ENCODING APPARATUS 10

PICTURE INPUT

ORIGINAL SIGNAL

PREDICTIVE ENCODING UNIT 14

QUANTIZED COEFFICIENT VALUES

VARIABLE-LENGTH ENCODING UNIT 15

BITSTREAM OUTPUT

INTERPOLATION FILTER COEFFICIENT CALCULATION UNIT 11

MV

INTERPOLATION FILTER COEFFICIENTS

PREDICTION ERROR SIGNAL

DECODING UNIT 16

INTERPOLATION FILTER COEFFICIENT DETERMINATION UNIT 12

MOTION DETECTION UNIT 132

PREDICTION SIGNAL

DECODED SIGNAL

MV

INTERPOLATED SIGNAL

INTERPOLATION POSITIONS, GROUP INFORMATION, AND SO ON

REFERENCE PICTURE INTERPOLATION UNIT 131

DECODED SIGNAL

REFERENCE PICTURE MEMORY 17

PREDICTION SIGNAL GENERATION UNIT 13

DECODED SIGNAL

EP 2 704 434 B1

# FIG. 2

INTERPOLATION
FILTER COEFFICIENTS

~ 12-1

INTERPOLATION FILTER COEFFICIENT
DETERMINATION UNIT

~ 121

INTERPOLATION FILTER
INFORMATION
ACQUISITION UNIT

PREVIOUSLY DEFINED INTERPOLATION
FILTER COEFFICIENTS

~ 122

MV

MV

INTERPOLATION POSITION
REFERENCE PROBABILITY
CALCULATION UNIT

INTERPOLATION POSITION
REFERENCE PROBABILITY
INFORMATION

~ 124

MSE CALCULATION
UNIT

INTERPOLATION TARGET
POSITION GROUPING UNIT

~123

INTERPOLATION POSITION
GROUP INFORMATION

MSE

125

MINIMUM MSE
STORAGE UNIT

DECODED
SIGNAL

INTERPOLATION POSITION GROUP INFORMATION,
INTERPOLATION FILTER INDICES,
AND INTERPOLATION FILTER COEFFICIENTS

EP 2 704 434 B1

# FIG. 3

EP 2 704 434 B1

(A)  | 1/2 PIXEL ACCURACY

□        ○        [□]

40%      25%

○        ○        (○)

15%      20%

[□]      (○)      [□]

(B)  | 1/4 PIXEL ACCURACY

□    ○    ○    ○    [□]

18%  9%   13%  8%

○    ○    ○    ○    (○)

11%  7%   5%   3%

○    ○    ○    ○    (○)

6%   2%   10%  1%

○    ○    ○    ○    (○)

1%   4%   1%   1%

[□]  (○)  (○)  (○)  [□]

□ : INTEGER-PIXEL
    POSITION

○ : FRACTIONAL-PIXEL
    POSITION

# FIG. 4

INTERPOLATION
FILTER COEFFICIENTS

~ 12-2

INTERPOLATION FILTER COEFFICIENT
DETERMINATION UNIT

~ 121

INTERPOLATION FILTER
INFORMATION
ACQUISITION UNIT

PREVIOUSLY DEFINED INTERPOLATION
FILTER COEFFICIENTS

~ 122

MV

MV

INTERPOLATION POSITION
REFERENCE PROBABILITY
CALCULATION UNIT

INTERPOLATION POSITION
REFERENCE PROBABILITY
INFORMATION

~ 126

IMPORTANCE DEGREE
DETERMINATION UNIT

INTERPOLATION TARGET
POSITION GROUPING UNIT  ~ 123

INTERPOLATION POSITION
GROUP INFORMATION

INTERPOLATION POSITION GROUP INFORMATION,
INTERPOLATION FILTER INDICES,
AND INTERPOLATION FILTER COEFFICIENTS

EP 2 704 434 B1

## FIG. 5

INTERPOLATION
FILTER COEFFICIENTS

~12-3

INTERPOLATION FILTER COEFFICIENT DETERMINATION UNIT

PREVIOUSLY DEFINED INTERPOLATION
FILTER COEFFICIENTS        ~121

INTERPOLATION FILTER
INFORMATION
ACQUISITION UNIT

MV

MV

INTERPOLATION POSITION
REFERENCE PROBABILITY
CALCULATION UNIT        ~122

126

INTERPOLATION POSITION
REFERENCE PROBABILITY
INFORMATION

IMPORTANCE DEGREE
DETERMINATION UNIT

~123

INTERPOLATION
FILTER
COEFFICIENTS

INTERPOLATION TARGET
POSITION GROUPING UNIT

124

MSE CALCULATION
UNIT

INTERPOLATION POSITION
GROUP INFORMATION

MSE

125

MINIMUM MSE
STORAGE UNIT

DECODED
SIGNAL

INTERPOLATION POSITION GROUP INFORMATION,
INTERPOLATION FILTER INDICES,
AND INTERPOLATION FILTER COEFFICIENTS

EP 2 704 434 B1

# FIG. 6

START

S101

INPUT FRAME

S102

DERIVE MOTION VECTORS USING
PREVIOUSLY DEFINED
INTERPOLATION FILTER

S103

CALCULATE INTERPOLATION
FILTER COEFFICIENTS

S104

CALCULATE REFERENCE PROBABILITIES
AT INTERPOLATION PIXEL POSITIONS
BASED ON MOTION VECTORS

S105

GROUPING PROCESS OF PIXEL
POSITIONS

S106

DETERMINE INTERPOLATION FILTER
TO BE APPLIED FOR EACH
INTERPOLATION POSITION GROUP

S107

EXECUTE INTERPOLATION PROCESS

S108

ENCODE INTERPOLATION POSITION
GROUP INFORMATION

S109

ENCODE INTERPOLATION FILTER
INDICES AND INTERPOLATION
FILTER COEFFICIENTS

S110

ENCODE OTHER PIECES OF
INFORMATION

S111

NO   COMPLETION FOR ALL
FRAMES ?

YES

END

# FIG. 7

VIDEO DECODING APPARATUS 20

BITSTREAM → VARIABLE-LENGTH DECODING UNIT 21

- INTERPOLATION FILTER INDICES
- INTERPOLATION FILTER COEFFICIENTS
- INTERPOLATION POSITION GROUP INFORMATION

PREDICTION ERROR SIGNAL → PREDICTIVE DECODING UNIT 24 → DECODED PICTURE

MV

INTERPOLATION FILTER COEFFICIENT DETERMINATION UNIT 22

INTERPOLATION FILTER COEFFICIENTS

PREDICTION SIGNAL GENERATION UNIT 23

REFERENCE PICTURE INTERPOLATION UNIT 231

PREDICTION SIGNAL

DECODED SIGNAL

REFERENCE PICTURE MEMORY 25

# FIG. 8

START

S201

ACQUIRE INFORMATION ON
FRAME HEADER

S202

DECODE INTERPOLATION POSITION
GROUP INFORMATION

S203

DECODE INTERPOLATION FILTER
INDICES AND INTERPOLATION FILTER
COEFFICIENTS

S204

DECODE VARIOUS PIECES OF
INFORMATION (MV)

S205

DETERMINE INTERPOLATION FILTER
TO BE APPLIED TO EACH
INTERPOLATION POSITION GROUP

S206

INTERPOLATION PROCESS AND
GENERATION OF PREDICTION SIGNAL

S207

GENERATE DECODED SIGNAL

S208

NO

COMPLETION FOR ALL FRAME ?

YES

END

# FIG. 9

| | |
|---|---|
| CPU ~50 | MEMORY ~51 |

VIDEO SIGNAL STORAGE UNIT ~52

PROGRAM STORAGE APPARATUS ~53

VIDEO ENCODING PROGRAM ~531

VIDEO DECODING PROGRAM ~532

ENCODED STREAM STORAGE UNIT ~54

# FIG. 10

A=1/32, B=-5/20, C=20/32

☐ : INTEGER-ACCURACY PIXEL
⬤ : INTERPOLATION PIXEL

# FIG. 11

$p_x$
☐ : INTEGER POSITION PIXEL

$p$
◯ : INTERPOLATION TARGET PIXEL

$\alpha$ : INTERPOLATION PIXEL POSITION
$(0 \leqq \alpha \leqq 1)$

30

# FIG. 12A

⊕ INTEGER-ACCURACY ○ INTERPOLATION
PIXEL           PIXEL

# FIG. 12B

Step 1 : horizontal

⊕ INTEGER-ACCURACY ○ INTERPOLATION
PIXEL           PIXEL

# FIG. 12C

Step 2 : vertical

INTEGER-ACCURACY PIXEL   INTERPOLATION PIXEL

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011141724 A
- JP 2011082725 A
- US 2010098345 A1, ANDERSSON KENNETH

### Non-patent literature cited in the description

- **SAKAE OKUBO ; SHINYA KADONO ; YOSHIHIRO KIKUCHI ; TERUHIKO SUZUKI.** H.264/AVC Textbook. Impress R&D, 2009, 119-123
- **KEN MCCANN ; WOO-JIN HAN ; IL-KOO KIM ; JUNG-HYE MIN ; ELENA ALSHINA ; ALEXANDER ALSHIN ; TAMMY LEE ; JIANLE CHEN ; VADIM SEREGIN ; SUNIL LEE.** Samsung's Response to the Call for Proposals on Video Compression Technology. *JCTVC-A124 r2, pp. 12-14, 1st JCT-VC Meeting,* April 2010, 12-14
- **Y. VATIS ; B. EDLER ; D. T. NGUYEN ; J. OSTERMANN.** Motion- and aliasing-compensated prediction using a two-dimensional non-separable adaptive Wiener interpolation filter. *Proc. ICIP2005, IEEE International Conference on Image Processing,* September 2005, II 894-897
- **S. WITTMANN ; T. WEDI.** Separable adaptive interpolation filter for video coding. *Proc. ICIP2008, IEEE International Conference on Image Processing,* October 2008, 2500-2503
- **SHOHEI MATSUO ; YUKIHIRO BANDOH ; SEISHI TAKAMURA ; HIROHISA JOZAWA.** Enhanced region-based adaptive interpolation filter. *Proc. PCS2010, IEEE Picture Coding Symposium,* December 2010, 526-529
- **FAOUZI KOSSENTINI ; NADER MAHDI ; HSAN GUERMAZI ; MOHAMMED ALI BEN AYED.** An Adaptive Interpolation Filtering Technique. *JCTVC-E284, 5th JCT-VC Meeting,* March 2011